# EUROPÄISCHE PATENTSCHRIFT

(11) **EP 1 650 458 B1**
(45) Veröffentlichungstag und Bekanntmachung des Hinweises auf die Patenterteilung: **17.10.2007**
(21) Anmeldenummer: 05022101.9
(22) Anmeldetag: 11.10.2005
(51) Int. Cl.: F16D 23/12

(54) **Ausrückvorrichtung zur Betätigung einer Kupplung**
Release mechanism to actuate a clutch
Dispositif de débrayage pour la commande d'un embrayage

(30) Priorität: 23.10.2004 DE 102004051700
(43) Veröffentlichungstag der Anmeldung: 26.04.2006
(73) Patentinhaber: LuK Lamellen und Kupplungsbau Beteiligungs KG, 77815 Bühl (DE)
(72) Erfinder: Pollak, Burkhard, Dr., 8010 Graz (AT)

(56) Entgegenhaltungen:
- EP-A- 1 455 106
- BE-A- 443 510
- DE-A1- 19 723 362

## Beschreibung

Die vorliegende Erfindung betrifft eine Kupplung mit einer Ausrückvorrichtung zur Betätigung der Kupplung, insbesondere einer Kupplung im Antriebsstrang eines Kraftfahrzeuges zwischen Antriebsmotor und Schaltgetriebe.

Ausrückvorrichtungen werden z. B. in Antriebssträngen von Kraftfahrzeugen mit automatisierten Schaltgetrieben verwendet. Im Fehlerfall, z. B. bei Ausfall eines Aktors, soll eine Möglichkeit bestehen, die Kupplung zu öffnen um das Kraftfahrzeug z. B. zum Abschleppen weiterhin bewegen zu können. Dies kann durch Vorrichtungen zu Notentriegelung erreicht werden oder durch einen Aktor, der bei Ausfall selbsttätig die Kupplung öffnet.

Im fehlerfreien Fall soll die Möglichkeit bestehen, die Kupplung oder eine der Kupplungen bei einem Parallelschaltgetriebe in einem Parkmodus des Kraftfahrzeuges zu schließen um diese am Wegrollen zu hindern. In dem Parkmodus, d.h. bei Stillstand des Fahrzeuges, abgestelltem Antriebsmotor und in der Regel einer speziellen Position eines Bedienelementes, z. B. angezogener Handbremse, Wählstellung "P" eines automatisierten Schaltgetriebes, werden in der Regel elektrische Systeme mit hohem Stromverbrauch vom elektrischen Bordnetz des Kraftfahrzeuges getrennt. Zu diesen Systemen gehört regelmäßig auch der Aktor oder die Aktoren eines Parallelschaltgetriebes zur Kupplungsbetätigung. Aktoren, die im Fehlerfall und so auch im stromlosen Zustand die Kupplung öffnen, sind daher nicht in der Lage, die Kupplung in diesem Betriebszustand zu schließen.

Die EP 1455106 A1 zeigt eine Kupplung mit einem Hebelausrücker zur gattungsgemäßen Betätigung der Kupplung.

Aufgabe der vorliegenden Erfindung ist es daher, eine Kupplung mit einer Ausrückvorrichtung anzugeben, die im Fehlerfall die Kupplung öffnet und in einem Parkmodus das Schließen der Kupplung bei stromlosem Aktor ermöglicht.

Dieses Problem wird gelöst durch eine Kupplung mit einer Ausrückvorrichtung zur Betätigung der Kupplung, insbesondere einer Kupplung im Antriebsstrang eines Kraftfahrzeuges zwischen Antriebsmotor und Schaltgetriebe, umfassend einen Ausrückhebel, der sich mit einem Innenlager an einem Ausrücklager und mit einem Außenlager an einer Feder abstützt und sich zwischen Außen- und Innenlager an einem in axialer Richtung -bezogen auf die Kupplungsachse- festgelegten und in radialer Richtung verschiebbaren Lagerbock, der mittels einer motorisch angetriebenen Spindel radial um einen Verschiebeweg verschiebbar ist, an einem Drehpunkt abstützt, wobei der Ausrückhebel in einem Betriebsbereich so gekrümmt ist, dass dieser auf den Lagerbock eine in radialer Richtung wirkende Kraft ausübt, sodass der Lagerbock in eine Stellung gedrückt wird, in der die Kupplung geöffnet ist und dass der Ausrückhebel einen Feststellbereich aufweist, der so gekrümmt ist, dass keine Kraft in radialer Richtung oder eine Kraft, die den Lagerbock in eine Stellung drückt, in der die Kupplung geschlossen ist, auf den Lagerbock ausübt. Der Betriebsbereich des Verschiebeweges ist der zum öffnen und Schlie-βen im Betrieb des Fahrzeuges genutzte Verschiebeweg. Dieser wird nun verlängert, wobei die Krümmung des Ausrückhebels so gestaltet ist, dass der Lagerbock in eine Stellung gedrückt wird, in der die Kupplung geschlossen ist. Der Ausrückhebel ist dazu vorzugsweise über den Betriebsbereich des Verschiebeweges aus Sicht des Lagerbocks konkav gekrümmt, entsprechend ist der Ausrückhebel über den Feststellbereich des Verschiebeweges aus Sicht des Lagerbocks vorzugsweise konvex gekrümmt. Die durch die Tellerfeder der Kupplung über das Ausrücklager auf den Ausrückhebel ausgeübte Kraft wirkt in die gleiche Richtung wie die durch die Feder, wobei sich der Ausrückhebel zwischen Ausrücklager und Feder auf dem Lagebock abstützt. Die eigentliche Kraft zur Betätigung der Kupplung liefert die Feder, die je nach Position des Lagerbockes das Ausrücklager mit einem mehr oder minder großen Hebelarm um den Lagerbock betätigt. Statt einer Feder kann hier jeder andere Energiespeicher eingesetzt werden. Um eine leichte und reibungsarme Verschiebung des Lagerbockes zu ermöglichen umfasst dieser vorzugsweise mindestens eine Rolle, die sich an dem Ausrückhebel abstützt. Der Ausrückhebel ist vorzugsweise über den Betriebsbereich des Verschiebeweges aus Sicht des Lagerbocks konvex gekrümmt und zumindest über einen Teil des Feststellbereich des Verschiebeweges aus Sicht des Lagerbocks konkav gekrümmt und bildet eine Vertiefung, wobei der Außendurchmesser der Rolle vorzugsweise mit dem Krümmungsdurchmesser der konvexen Krümmung korrespondiert, die Rolle "passt" in die Vertiefung.

Vorzugsweise ist die Ausrückvorrichtung derart gestaltet, dass der Lagerbock mindestens eine Rolle umfasst, die sich an einer kupplungsglockenfesten Bahn abstützt. Gegenüber alternativen Ausgestaltungen, beispielsweise mit einer Gleitfläche, ist dabei die Betriebssicherheit bei Verschmutzung z. B. durch Kupplungsabrieb günstiger, insbesondere ändern sich Gleit- und Haftreibung nur geringfügig über der Lebensdauer.

Die Spindel ist vorzugsweise nicht selbsthemmend ausgelegt (insbesondere durch geeignete Wahl der Gewindesteigung), bei einer auf den Lagerbock ausgeübten Kraft in axialer Richtung der Spindel wird demzufolge ein Moment auf die Spindel ausgeübt.

Der Lagerbock kann in einer Weiterbildung der Ausrückvorrichtung mit einem Bedienelement zur Notöffnung verbunden sein. Dies kann beispielsweise ein manueller Bedienhebel, ein Seilzug oder dergleichen sein. Das Bedienelement zur Notöffnung muss nur eine Möglichkeit bieten, den Lagerbock manuell (oder z. B. durch einen Energiespeicher wie eine Feder oder dergleichen) aus dem Feststellbereich in den Betriebsbereich zu bewegen.

Das eingangs genannte Problem wird auch gelöst durch ein Verfahren, bei dem der Lagerbock in einem Parkmodus des Kraftfahrzeuges in den Feststellbereich verschoben wird. Vorzugsweise ist dabei vorgesehen, dass der Parkmodus bei stehendem Fahrzeug und Stillstand des Antriebsmotors vermittels eines Bedienelementes, wie einem Kupplungspedal, einer Feststellbremse, einer Parkstellung eines Schalthebels oder dergleichen, eingenommen wird.

Im Folgenden werden Ausführungsbeispiele der Erfindung anhand der beiliegenden Zeichnungen erläutert. Dabei zeigen:
- Fig. 1: einen schematischen Aufbau einer erfindungsgemäßen Ausrückvorrichtung bei geöffneter Kupplung;
- Fig. 2: die Darstellung der Fig. 1 bei geschlossener Kupplung;
- Fig. 3: die Darstellung der Fig. 1 bzw. Fig. 2 bei sicher geschlossner Kupplung;
- Fig. 4: a) bis c) eine Skizze zu den Kraftverhältnissen.

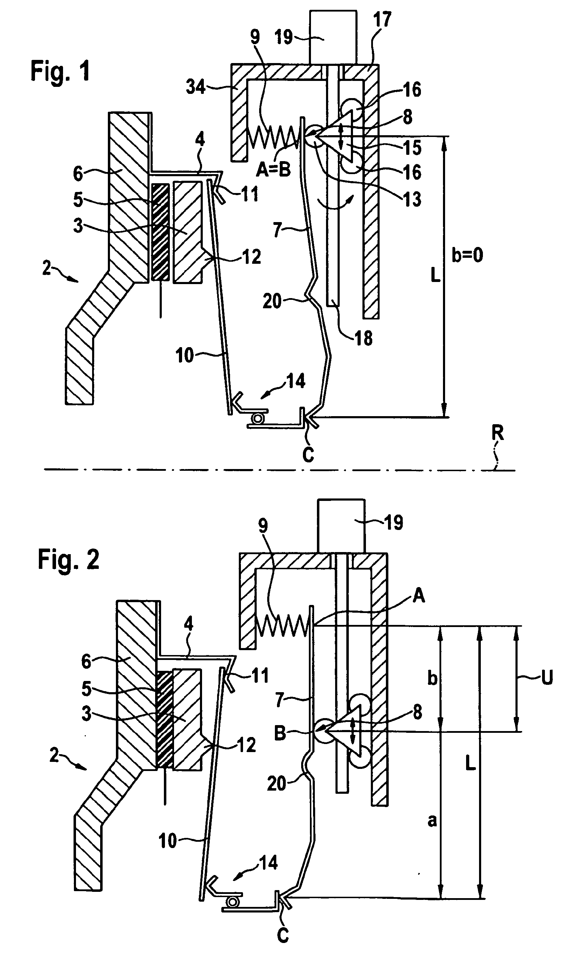

Zunächst wird anhand der Fig. 1 der prinzipielle Aufbau der erfindungsgemäßen Ausrückvorrichtung erläutert. Obwohl die meisten der Einzelteile bzw. Baugruppen rotationssymmetrisch zu einer Drehachse R einer hier nicht näher dargestellten Kurbelwelle bzw. Getriebeeingangswelle sind, wurde auf diese Darstellung der Übersichtlichkeit halber bewusst verzichtet, in Fig. 1 bis 3 ist lediglich die Rotationsachse R als Symmetrieachse angedeutet.

Eine Kupplung 2 umfasst im Wesentlichen eine Druckplatte 3, eine Gegendruckplatte 6 sowie eine zwischen Druckplatte 3 und Gegendruckplatte 6 angeordnete Kupplungsscheibe 5. Die Kupplungsscheibe 5 ist mit der hier nicht dargestellten Getriebeeingangswelle drehfest verbunden, die Gegendruckplatte 6 ist mit der hier nicht dargestellten Kurbelwelle verbunden und die Druckplatte 3 ist mit der Gegendruckplatte 6 axial in Richtung der Drehachse verschiebbar, jedoch gegenüber der Gegendruckplatte 6 drehfest, gelagert. Durch Aufdrücken der Druckplatte 3 auf die Gegendruckplatte 6 wird die Kupplungsscheibe 5 zwischen beiden eingeklemmt, so dass durch die auftretende (trockene) Reibung ein Drehmoment zwischen Gegendruckplatte 6 und Kupplungsscheibe 5 übertragen werden kann.

An der Gegendruckplatte 6 ist ein Kupplungsdeckel 4 angeordnet, welcher eine radial nach innen gerichtete Andruckscheibe 11 aufweist. An dieser stützt sich eine Tellerfeder 10 ab, die sich des Weiteren an einem Druckring 12 der Druckplatte 3 abstützt. Wird der radial innere Bereich der Tellerfeder 10 zum Beispiel mit einem hier schematisch dargestellten Ausrücklager 14, in der Darstellung der Figuren 1 bis 3, nach links gedrückt, so wird die Druckplatte 3 gegen die Gegendruckplatte 6 gedrückt, so dass die Kupplung geschlossen wird und ein Drehmoment zwischen Gegendruckplatte 6 und Kupplungsscheibe 5 übertragen werden kann. In Fig. 1 ist dazu die vollständig geöffnete Kupplung dargestellt, in dieser Stellung wird kein Drehmoment übertragen, in Fig. 2 ist die vollständig geschlossene Kupplung dargestellt, in dieser Kupplungsstellung wird das maximale Moment oder Nennmoment übertragen.

Im Folgenden soll die Wirkungsweise der eigentlichen Ausrückvorrichtung beschrieben werden. Diese dient, wie zuvor kurz angedeutet, dazu, mittels eines Ausrücklagers 14 die Tellerfeder 10 zwischen der in Fig. 1 dargestellten ausgekuppelten Stellung und der in Fig. 2 dargestellten eingekuppelten Stellung zu bewegen. Die Betätigung des Ausrücklagers 14 erfolgt im Wesentlichen mit einem Hebel 7, der mit einer Feder 9 um einen Drehpunkt B betätigt wird. Der Hebel 7 stützt sich an einem Innenlager C an dem Ausrücklager 14 ab und an einem Au-βenlager A an der Feder 9. Beide Lagerstellen sind hier nur schematisch angedeutet, es handelt sich hier um Lager, die den Hebel in radialer Richtung sowie in Umfangsrichtung festlegen. Die Tellerfeder 10 übt auf das Ausrücklager 14 eine in der Darstellung der Figuren 1 bis 3 nach rechts gerichtete Kraft aus, die Feder 9 übt auf das Außenlager A ebenfalls eine nach rechts gerichtete Kraft aus. Um an dem Innenlager C eine in der Darstellung der Figuren 1 bis 3 nach links gerichtete Kraft auf das Ausrücklager 14 auszuüben, ist nun ein Gegenlager B zwischen dem Innenlager C und dem Außenlager A angeordnet, so dass der Hebel 7 nach Art einer Wippe betätigt werden kann. Das Gegenlager B ist radial verschiebbar angeordnet. Das Gegenlager B wird gebildet von einer Rolle 13, die sich auf dem Hebel 7 abstützt. Die Rolle 13 wiederum ist an einem Lagerbock 15 gelagert, der sich mit zwei Stützrollen 16 an einer kupplungs- bzw. getriebegehäusefest angeordneten Abstützung 17 abstützt. Der Lagerbock 15 umfasst eine Gewindebohrung, in die eine Spindel 18, die durch einen Elektromotor 19 gedreht werden kann, eingreift und so einen Aktor zur Betätigung der Kupplung bildet. Durch Drehen der Spindel 18 kann der Lagerbock 15 in Richtung des Doppelpfeils 8 verschoben werden. In den Figuren 1 bis 3 sind verschiedene Stellungen des Lagerbocks 15 und damit des Gegenlagers B dargestellt, diese können mit Hilfe der Drehung der Spindel 18 elektromotorisch angefahren werden.

Der Gesamtabstand L zwischen innerer Lagerstelle C und äußerer Lagerstelle A wird nun durch die Stellung des Gegenlagers B aufgeteilt in einen der Feder 9 zugeordneten Hebelarm a und einen dem Ausrücklager 14 zugeordneten Hebelarm b. Das Verhältnis der auf das Ausrücklager 14 ausgeübten Kraft zu der Federkraft 9 entspricht dem Verhältnis der beiden Hebelarme b gegenüber b nach bekannten Hebelgesetzen. Je weiter das Gegenlager B von dem Außenlager A verrückt wird, desto geringer wird die auf das Ausrücklager 14 ausgeübte Kraft.

Wie zuvor ausgeführt, zeigt Fig. 1 den ausgekuppelten Zustand, Fig. 2 den eingekuppelten Zustand, bei dem also das maximale Drehmoment durch die Kupplung 2 übertragen werden kann. Der Verschiebeweg zwischen den Stellungen des Gegenlagers B in den Figuren 1 und 2 wird als Betriebsbereich U des Verschiebeweges bezeichnet. Im Betrieb des Kraftfahrzeuges wird der Lagerbock 15 nur in diesem Bereich verschoben.

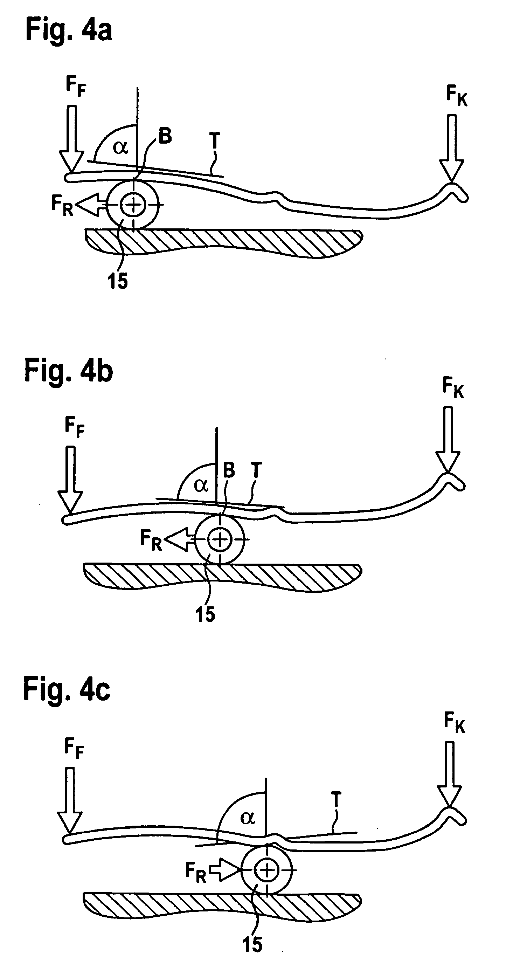

Wie aus den Figuren 1 bis 3 ersichtlich, ist der Hebel 7 nun dergestalt gekrümmt, dass in jeder Stellung des Betriebsbereiches U des Verschiebeweges eine (Rückstell-) Kraft in Richtung der Stellung gemäß Fig. 1, wenn also das Gegenlager B identisch ist mit dem Außenlager A, ausgeübt wird. Die Steigung der Spindel 18 ist dabei so ausgelegt, dass diese auch in Verbindung mit einem weiteren Bremsmoment des Elektromotors 19 nicht selbsthemmend ist. Wird also durch den Elektromotor 19 kein Drehmoment aufgebracht, so strebt die Ausrückvorrichtung die in Fig. 1 dargestellte Stellung, bei der die Kupplung vollständig geöffnet ist, an. Zur Verdeutlichung dieses Effektes dient Fig. 4A, 4B, 4C, in der die Kraftverhältnisse und insbesondere die auf den Lagerbock 15 ausgeübte Kraft deutlicher dargestellt sind. Der Lagerbock 15 ist in den Darstellungen der Fig. 4 zum besseren Verständnis als einzelne Rolle dargestellt.

Die von der Feder 9 ausgeübte Federkraft F_{F} verhält sich zu der durch das Ausrücklager 14 auf den Hebel ausgeübten (Kupplungs-) Kraft F_{K} wie die Verhältnisse der beiden Hebelarme a und b, also F_{F}*b=F_{K}*a. Der Hebel 7 ist nun so gekrümmt, dass in jeder beliebigen Stellung des Lagerbockes 15 eine an das Gegenlager B gelegte Tangente T zum Außenlager A hin geneigt ist, der Winkel α zwischen der Tangente T und einer senkrechten zur Abstützung 17 ist also kleiner als 90°. Der Hebel ist innerhalb des Betriebsbereiches U also aus Sicht des Lagerbockes 15 und insbesondere von der Rolle 13 aus betrachtet konkav gekrümmt. Die so an das Gegenlager B gebildete schiefe Ebene bewirkt, dass nicht nur eine in axialer Richtung der Kurbelwelle bzw. Getriebeeingangswelle wirkende Gegenkraft F_{G} auftritt, sondern zusätzlich eine in radialer Richtung, genauer gesagt nach außen hin in Richtung des Außenlagers A hin gerichtete Rückstellkraft F_{R} auftritt.

Wird durch den Elektromotor 19 kein Drehmoment auf die Spindel 18 ausgeübt, zum Beispiel weil dieser vom Bordnetz des Kraftfahrzeuges getrennt worden ist, beispielsweise bei abgestelltem Fahrzeug, oder weil ein Ausfall des Elektromotors oder vorgeschalteter elektrischer Komponenten vorliegt, so strebt die Ausrückvorrichtung aufgrund der Geometrie des Ausrückhebels und der zuvor dargestellten daraus herrührenden Kraftverhältnisse die geöffnete Kupplungsstellung gemäß Fig. 1 an. Das System ist also "fail safe", beim Ausfall oder dem Ausschalten von Betätigungskomponenten öffnet sich die Kupplung selbsttätig.

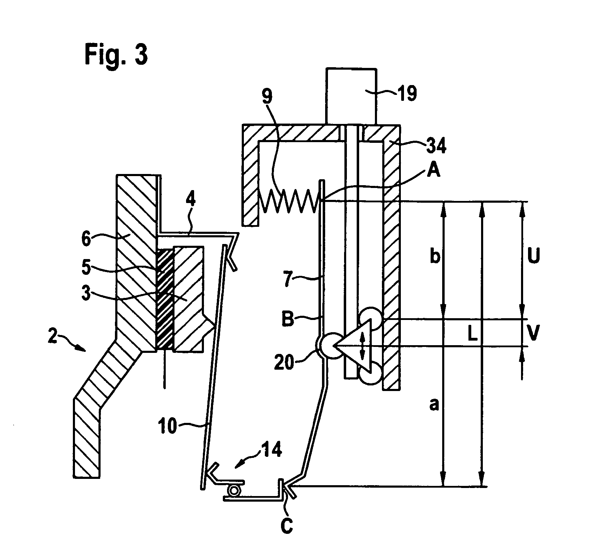

Außerhalb des Betriebsbereiches U des Verschiebeweges des Lagerbockes 15 ist an dem Hebel 7 ein ebener oder konvex gekrümmter Bereich angeordnet, in dem wiederum eine (ebenfalls konkave) Vertiefung 20 angeordnet ist. Legt man in diesem Bereich eine Tangente T wie zuvor erläutert an, so ist der Winkel α größer als 90° und die Kraft F_{R} wird negativ (bzw. zeigt in die entgegengesetzte Richtung wie in Fig. 4 a und b). Wird der Lagerbock 15 über den Betriebsbereich U hinaus in Richtung der Innenlager C in einen Feststellbereich V verschoben, so erreicht das Gegenlager B die Vertiefung 20, bei der dieses eine stabile Lage einnimmt. Durch die konkave Krümmung hat eine etwaige radiale Kraft keine Wirkung mehr auf den Lagerbock 15, dieser wird auf also festgelegt. Wird also durch den Elektromotor 19 kein Drehmoment auf die Spindel 18 ausgeübt, so wird der Lagerbock 15 nun nicht mehr in die äußere Stellung gemäß Fig. 1 zurückgedrückt, sondern verharrt in der Stellung gemäß Fig. 3. Es handelt sich hier also um einen stabilen Zustand, der durch eine äußere Kraft, z. B. durch ein auf die Spindel 18 aufgebrachtes Drehmoment oder durch eine direkt auf den Lagerbock 15 einwirkende Kraft, verlassen werden muss. Der Verschiebeweg erstreckt sich also über dem Betriebsbereich U und dem Feststellbereich V.

Im Betrieb des Kraftfahrzeuges wird nur der Betriebsbereich U des Verschiebeweges ausgenutzt, zum Abstellen des Kraftfahrzeuges wird demgegenüber der Feststellbereich V angefahren. Indem der Lagerbock 15 in die Stellung gemäß Fig. 3 gebracht wird, wird die Kupplung 2 sicher zugedrückt, ohne eine äußere Kraft, zum Beispiel durch ein auf die Spindel 18 aufgebrachtes Drehmoment, verbleibt der Lagerbock 15 in der gezeigten Position und die Kupplung ist geschlossen. Auch bei Ausfall von Komponenten wird diese Stellung nicht selbsttätig verlassen, sie ist also stabil. Wie zuvor angedeutet, wird diese Stellung angefahren, um zum Beispiel bei abgestelltem Kraftfahrzeug und eingelegten Gang eine Wegrollsicherung, wie dies bei einem manuellen Schaltgetriebe üblich ist, zu bewirken.

Das Einnehmen des Betriebszustandes "sicher zugedrückte Kupplung" kann seitens der Fahrzeugelektronik von unterschiedlichen Bedingungen abhängig gemacht werden. Verfügt das Fahrzeug über ein automatisiertes Schaltgetriebe, das aber trotzdem noch mittels einer Kupplung und eines Schalthebels als Bedienelemente betätigt, so kann die nicht betätigte Kupplung, das Einlegen eines Ganges sowie der abgestellte Motor bei stehendem Fahrzeug zur Einnahme des zuvor dargestellten Betriebszustandes herangezogen werden. Bei einem automatisierten Schaltgetriebe, das in einem Automatikmodus betrieben wird, kann dazu zum Beispiel eine Parkstellung eines Wählhebels für das Getriebe zusammen mit abgestelltem Motor und stehendem Fahrzeug für die Einnahme dieses Betriebszustandes herangezogen werden.

Die Ausrückvorrichtung wurde in dem Ausführungsbeispiel der Figuren 1 bis 4 beschrieben anhand einer Kupplung, die aktiv zugedrückt wird und die durch die Kraft der Tellerfeder selbsttätig öffnet. Selbstverständlich kann die gesamte Vorrichtung geometrisch in der Form umgekehrt werden, sodass diese zur Betätigung einer Kupplung, die aktiv geöffnet werden muss, geeignet ist.

### Bezugszeichenliste

- A: äußere Lagerstelle
- B: Drehpunkt / Gegenlager
- C: Innenlager
- U: Betriebsbereich
- V: Feststellbereich
- 2: Kupplung
- 3: Druckplatte
- 4: Kupplungsdeckel
- 5: Kupplungsscheibe
- 6: Gegendruckplatte
- 7: Hebel
- 8: Doppelpfeil
- 9: Feder
- 10: Tellerfeder
- 11: Andruckscheibe
- 12: Druckring
- 13: Rolle
- 14: Ausrücklager
- 15: Lagerbock
- 16: Stützrollen
- 17: Abstützung
- 18: Spindel
- 19: Elektromotor
- 20: Vertiefung

## Patentansprüche

1. Kupplung, insbeondere im Antriebsstrang eines Kraftfahrzeuges zwischen Antriebsmotor und Schaltgetriebe mit einer Ausrückvorrichtung zur Betätigung der Kupplung, umfassend einen Ausrückhebel (7), der sich mit einem Innenlager (C) an einem Ausrücklager (14) und mit einem Außenlager (A) an einer Feder (9) abstützt und sich zwischen Außen- und Innenlager (A, C) an einem in bezogen auf die Kupplungsachse axialer Richtung festgelegten und in radialer Richtung verschiebbaren Lagerbock (15), der mittels einer motorisch (19) angetriebenen Spindel (18) radial um einen Verschiebeweg verschiebbar ist, an einem Drehpunkt (B) abstützt, wobei der Ausrückhebel in einem Betriebsbereich (U) so gekrümmt ist, dass dieser auf den Lagerbock eine in radialer Richtung wirkende Kraft ausübt, sodass der Lagerbock in eine Stellung gedrückt wird, in der die Kupplung geöffnet ist, **dadurch gekennzeichnet, dass** der Ausrückhebel einen Feststellbereich (V) aufweist, der so gekrümmt ist, dass keine Kraft in radialer Richtung oder eine Kraft, die den Lagerbock in eine Stellung drückt, in der die Kupplung geschlossen ist, auf den Lagerbock ausgeübt wird.

2. Kupplung nach Anspruch 1, **dadurch gekennzeichnet, dass** der Ausrückhebel (7) über den Betriebsbereich (U) des Verschiebeweges aus Sicht des Lagerbocks (15) konvex gekrümmt ist.

3. Kupplung nach Anspruch 2, **dadurch gekennzeichnet, dass** der Ausrückhebel (7) zumindest über einen Teil (20) des Feststellbereich (V) des Verschiebeweges aus Sicht des Lagerbocks (15) konkav gekrümmt ist.

4. Kupplung nach einem der vorhergehenden Ansprüche, **dadurch gekennzeichnet, dass** der Lagerbock (15) mindestens eine Rolle (13) umfasst, die sich an dem Ausrückhebel (7) abstützt.

5. Kupplung nach einem der vorhergehenden Ansprüche, **dadurch gekennzeichnet, dass** der Außendurchmesser der Rolle (13) mit einem Krümmungsdurchmesser der konkaven Krümmung (20) korrespondiert.

6. Kupplung nach einem der vorhergehenden Ansprüche, **dadurch gekennzeichnet, dass** der Lagerbock (15) mindestens eine Rolle (16) umfasst, die sich an einer kupplungsglockenfesten Bahn (17) abstützt.

7. Kupplung nach einem der vorhergehenden Ansprüche, **dadurch gekennzeichnet, dass** die Spindel (18) nicht selbsthemmend ist.

8. Kupplung nach einem der vorhergehenden Ansprüche, **dadurch gekennzeichnet, dass** der Lagerbock (15) mit einem Bedienelement zur Notöffnung verbunden ist.

9. Verfahren zum Betrieb einer Kupplung nach einem der vorhergehenden Ansprüche, **dadurch gekennzeichnet, dass** der Lagerbock (15) in einem Parkmodus des Kraftfahrzeuges in den Feststellbereich (V) verschoben wird.

10. Verfahren nach dem vorhergehenden Anspruch, **dadurch gekennzeichnet, dass** der Parkmodus bei stehendem Fahrzeug und Stillstand des Antriebsmotors vermittels eines Bedienelementes eingenommen wird.

## Claims

1. Clutch, in particular in the power train of a motor vehicle between drive engine and speed-change transmission, having a disengaging device for operating the clutch, comprising a clutch release lever (7) which is braced by an inner bearing (C) against a throw-out bearing (14) and with an outer bearing (A) against a spring (9), and which is braced against a rotation point (B) between outer and inner bearing (A, C) on a bearing block (15) which is fixed in the axial direction in relation to the clutch axis and is movable radially by a displacement distance in the radial direction by means of a motor-(19)-driven spindle (18), the clutch release lever being curved in an operating range (U) so that it exerts a force on the bearing block acting in the radial direction, so that the bearing block is pressed into a position in which the clutch is disengaged, **characterized in that** the clutch release lever has a locking range (V) which is curved in such a way that no force is exerted in a radial direction on the bearing block, nor any force that presses the bearing block into a position in which the clutch is engaged.

2. Clutch according to Claim 1, **characterized in that** the clutch release lever (7) is curved convexly over the operating range (U) of the displacement distance from the perspective of the bearing block (15).

3. Clutch according to Claim 2, **characterized in that** the clutch release lever (7) is curved concavely over at least part (20) of the locking range (V) of the displacement distance from the perspective of the bearing block (15).

4. Clutch according to one of the preceding claims, **characterized in that** the bearing block (15) includes at least one roller (13) which is braced against the clutch release lever (7).

5. Clutch according to one of the preceding claims, **characterized in that** the outside diameter of the roller (13) corresponds to a diameter of curvature of the concave curvature (20).

6. Clutch according to one of the preceding claims, **characterized in that** the bearing block (15) includes at least one roller (16) which is supported on a path (17) which is fixed on the clutch bell housing.

7. Clutch according to one of the preceding claims, **characterized in that** the spindle (18) is not self-locking.

8. Clutch according to one of the preceding claims, **characterized in that** the bearing block (15) is connected to an operating element for emergency disengagement.

9. Method for operating a clutch according to one of the preceding claims, **characterized in that** the bearing block (15) is moved into the locking range (V) when the motor vehicle is in park mode.

10. Method according to the preceding claim, **characterized in that** the system is placed in park mode by means of an operating element when the vehicle is stationary and the drive engine is standing still.

## Revendications

1. Embrayage, en particulier dans la chaîne cinématique d'un véhicule automobile, disposé entre un moteur d'entraînement et une boîte de vitesses, avec un dispositif de débrayage pour la commande de l'embrayage, comprenant un levier de débrayage (7) qui s'appuie, par un palier intérieur (C), sur une butée de débrayage (14) et, par un palier extérieur (A), sur un ressort (9) et qui, entre le palier extérieur (A) et le palier intérieur (C), s'appuie sur un point de rotation (B), au niveau d'un support de palier (15) fixé dans la direction axiale, par rapport à l'axe d'embrayage, et mobile dans la direction radiale, support de palier qui est mobile suivant une course de déplacement dans le sens radial, au moyen d'une broche (18) entraînée par un moteur (19), où le levier de débrayage est courbé dans une zone de fonctionnement (U), de manière telle que ce levier de débrayage exerce, sur le support de palier, une force agissant dans la direction radiale, de sorte que le support de palier est poussé dans une position dans laquelle l'embrayage est ouvert, **caractérisé en ce que** le levier de débrayage présente une zone de blocage (V) qui est courbée de manière telle, qu'aucune force ne soit exercée sur le support de palier, dans la direction radiale, ou bien qu'une force, qui pousse le support de palier dans une position dans laquelle l'embrayage est fermé, soit exercée sur le support de palier.

2. Embrayage selon la revendication 1, **caractérisé en ce que** le levier de débrayage (7), sur la zone de fonctionnement (U) de la course de déplacement, est courbé de façon convexe, dans la perspective du support de palier (15).

3. Embrayage selon la revendication 2, **caractérisé en ce que** le levier de débrayage (7), au moins sur une partie (20) de la zone de blocage (V) de la course de déplacement, est courbé de façon concave, dans la perspective du support de palier (15).

4. Embrayage selon l'une quelconque des revendications précédentes, **caractérisé en ce que** le support de palier (15) comprend au moins un rouleau (13) qui s'appuie sur le levier de débrayage (7).

5. Embrayage selon l'une quelconque des revendications précédentes, **caractérisé en ce que** le diamètre extérieur du rouleau (13) correspond à un diamètre de courbure de la courbure concave (20).

6. Embrayage selon l'une quelconque des revendications précédentes, **caractérisé en ce que** le support de palier (15) comprend au moins un rouleau (16) qui vient en appui sur une voie support (17) solidaire de la cloche d'embrayage.

7. Embrayage selon l'une quelconque des revendications précédentes, **caractérisé en ce que** la broche (18) n'est pas autobloquante.

8. Embrayage selon l'une quelconque des revendications précédentes, **caractérisé en ce que** le support de palier (15) est relié à un élément de commande, pour l'ouverture de secours.

9. Procédé de fonctionnement d'un embrayage selon l'une quelconque des revendications précédentes, **caractérisé en ce que** le support de palier (15) est, dans un mode stationnement du véhicule, déplacé dans la zone de blocage (V).

10. Procédé selon la revendication précédente, **caractérisé en ce que** le mode stationnement, lorsque le véhicule est à l'arrêt et que le moteur d'entraînement est coupé, est pris au moyen d'un élément de commande.
